# EUROPEAN PATENT APPLICATION

(11) **EP 4 723 216 A1**
(43) Date of publication of application: **08.04.2026**
(21) Application number: 25739092.2
(22) Date of filing: 09.01.2025
(51) Int. Cl.: H01M 4/36, H01M 4/02

(54) **COMPOSITE POSITIVE ELECTRODE ACTIVE MATERIAL, MANUFACTURING METHOD THEREOF, AND ALL-SOLID-STATE BATTERY COMPRISING SAME**

(30) Priority: 09.01.2024 KR 20240003780
(71) Applicant: Solivis Inc., Hanam-si, Gyeonggi-do 12939 (KR)
(72) Inventor: SHIN, Dong Wook, Guri-si, Gyeonggi-do 11921 (KR); LEE, Young Min, Seoul 01362 (KR); KIM, Sung Jae, Yangju-si, Gyeonggi-do 11523 (KR)
(74) Representative: Klöckner, Christoph
(86) International application number: PCT/KR2025/000514
(87) International publication number: WO 2025/150927

(57) **Abstract**

The present disclosure relates to a composite cathode active material comprising an active material, a first electrolyte layer disposed on the active material, and a second electrolyte layer disposed on the first electrolyte layer, wherein the first electrolyte layer is present in an amount of 2.5 wt% to 5.0 wt% based on the active material, wherein the composite cathode active material of the present disclosure includes a thin and uniform electrolyte coating layer on its surface, thereby improving electrochemical characteristics and rate capability of an all-solid-state battery.

## Description

### Technical Field

The present disclosure relates to a composite cathode active material, a method of manufacturing the same, and an all-solid-state battery including the same.

### Background Art

Lithium secondary batteries, characterized by high energy density and portability, are predominantly used in small terminals such as smartphones, tablets, and laptops. Recently, research has been actively pursued as lithium secondary batteries have begun to be employed in electric vehicles and energy storage systems (ESS).

Lithium secondary batteries currently used in industry employ electrolytes containing flammable organic solvents. Consequently, the lithium secondary batteries face safety issues, such as explosions or fires, when subjected to collisions or penetrations. To address these issues, all-solid-state batteries utilizing solid electrolytes instead of liquid electrolytes have been proposed. An all-solid-state battery refers to a battery in which all components are solid, and in particular, a battery that utilizes a solid electrolyte. These all-solid-state batteries are safe because they eliminate risks such as explosions due to electrolyte leakage. Furthermore, all-solid-state batteries are advantageous in that they facilitate the production of thin batteries.

For all-solid-state batteries, active materials and solid electrolytes must be formed into a composite to provide ion conduction paths within an electrode. To facilitate a sufficient contact area between the active material and the solid electrolyte, an electrolyte coating layer with an appropriate thickness and ratio must be formed on the active material. However, conventional solid-phase or liquid-phase coating methods make it difficult to form a thin and uniform coating layer on the surface of the active material.

### Disclosure of Invention

### Technical Problem

The present disclosure provides a composite cathode active material capable of improving the electrochemical characteristics of an all-solid-state battery by coating an electrolyte thinly and densely on the surface of an active material to reduce interfacial resistance between the active material and the electrolyte.

### Solution to Problem

According to an embodiment of the present disclosure, a composite cathode active material includes an active material, a first electrolyte layer disposed on the active material, and a second electrolyte layer disposed on the first electrolyte layer, wherein the first electrolyte layer is present in an amount of 2.5 wt% to 5.0 wt% based on the active material.

### Advantageous Effects of Invention

The composite cathode active material of the present disclosure has a thin and uniform electrolyte coating layer formed on a surface thereof, so that the electrochemical characteristics and the rate capability of an all-solid-state battery can be improved.

### Brief Description of Drawings

FIG. 1 is a schematic cross-sectional view of a composite cathode active material according to an embodiment of the present disclosure.
FIG. 2 is a flowchart illustrating a method of manufacturing a composite cathode active material according to another embodiment of the present disclosure.
FIG. 3 is a photograph showing a surface of a composite cathode active material manufactured according to the method of FIG. 2.
FIG. 4 is a flowchart illustrating another example of the manufacturing method of FIG. 2.
FIG. 5 is a graph illustrating ionic conductivity.
FIG. 6 is a graph illustrating rate capability of Comparative Examples 1 to 3 and Example 1.
FIG. 7 is a charge-discharge graph of Comparative Example 1 and Examples 2 to 4.
FIG. 8 is a graph illustrating cycle life and rate capability of Comparative Example 1 and Examples 2 to 4.
FIG. 9 is a graph illustrating rate capability of Examples 1, 5, and 6.
FIG. 10 is an X-ray diffraction (XRD) graph of Comparative Example 1 and Examples 3 to 6.
FIG. 11 is a rate capability graph of Comparative Example 1 and Example 6.

### Best Mode for Carrying out the Invention

One embodiment of the present disclosure relates to a composite cathode active material comprising a first electrolyte layer disposed on the active material, and a second electrolyte layer disposed on the first electrolyte layer, wherein the first electrolyte layer is present in an amount of 2.5 wt% to 5.0 wt% based on the active material.

A thickness of the first electrolyte layer may be 100 nm to 1000 nm.

The second electrolyte layer may include first particles and second particles having different sizes, and an average particle diameter (D50) of the first particles may be larger than that of the second particles.

An average particle diameter (D50) of the first electrolyte layer may be identical to the average particle diameter (D50) of the second particles.

A ratio of the first particles to the second particles may be 9:1 to 7:3.

The first electrolyte layer and the second electrolyte layer may include the same material.

The composite cathode active material may further include an intermediate layer between the active material and the first electrolyte layer.

Another embodiment of the present disclosure relates to a method of manufacturing a composite cathode active material, comprising: preparing a solid electrolyte; mixing the solid electrolyte with an active material in a solvent to form a mixture; reacting the mixture to coat the solid electrolyte onto the active material; and mixing the solid-electrolyte-coated active material with the solid electrolyte and a conductive agent.

In the preparing of the solid electrolyte, the solid electrolyte may include a first solid electrolyte and a second solid electrolyte having different average particle diameters (D50).

The mixture may include the second solid electrolyte, and the second solid electrolyte may have the average particle diameter (D50) smaller than that of the first solid electrolyte.

The second solid electrolyte included in the mixture may be present in an amount of 2.5 wt% to 5 wt% based on the active material.

The method may further include performing a heat treatment.

Another embodiment of the present disclosure relates to an all-solid-state battery comprising a composite cathode active material and an anode layer disposed on the composite cathode active material, wherein the composite cathode active material comprises an active material, a first electrolyte layer disposed on the active material, and a second electrolyte layer disposed on the first electrolyte layer.

### Modes of the Invention

Before describing preferred embodiments of the present disclosure in detail below, it is noted that the terms or words used in this specification and claims should not be construed as limited to their ordinary or dictionary meanings, but should be interpreted in meanings and concepts consistent with the technical spirit of the present disclosure.

Throughout this specification, the terms "first," "second," and the like are used not in a limiting sense but for the purpose of distinguishing one component from another.

Throughout this specification, singular expressions include plural expressions unless the context clearly dictates otherwise.

Throughout this specification, terms such as "comprise" or "have" mean that the features or components described in the specification are present, and do not preclude the possibility that one or more other features or components may be added.

Throughout this specification, when a layer, region, component, or the like is referred to as being "on" another part, this includes not only the case where it is directly on the other part but also the case where another layer, region, component, or the like is interposed therebetween.

The reference numerals for the respective steps are used for convenience of description and do not indicate the order of the respective steps. Unless the context clearly specifies a particular order, the respective steps may be performed in an order different from the order stated. That is, the respective steps may be performed in the same order as stated, may be performed substantially simultaneously, or may be performed in reverse order.

Hereinafter, embodiments of the present disclosure will be described. However, the scope of the present disclosure is not limited to the preferred embodiments below, and those skilled in the relevant technical field may implement various modifications of the content described herein within the scope of the present disclosure.

The present disclosure relates to a composite cathode active material, a method of manufacturing the same, and an all-solid-state battery including the same.

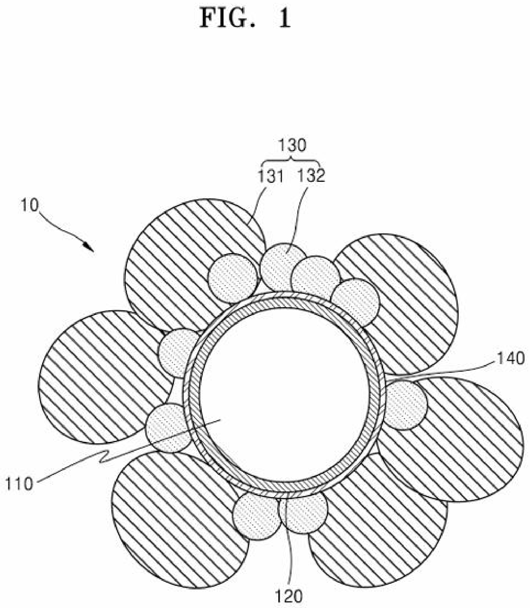

FIG. 1 is a schematic cross-sectional view illustrating an example of a composite cathode active material according to an embodiment of the present disclosure.

Referring to FIG. 1, the composite cathode active material 10 may include an active material 110, a first electrolyte layer 120 coated on a surface of the active material 110, a second electrolyte layer 130 coated on the first electrolyte layer 120, and an intermediate layer 140.

The active material 110 refers to a material directly responsible for an electromotive reaction of a cathode or an anode of a battery, and may include a cathode active material and an anode active material. For example, the active material 110 may include a cathode active material, which refers to a material that receives electrons and is reduced along with cations. Specifically, the cathode active material may include a combination of one or more selected from lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganese oxide, and lithium iron phosphate; nickel sulfide; copper sulfide; lithium sulfide; iron oxide; and vanadium oxide, but any material used as a cathode active material in the relevant technical field may be utilized without being limited thereto.

The first electrolyte layer 120 may be disposed on the active material 110 and include an oxide-based solid electrolyte and a sulfide-based solid electrolyte, and more preferably may include a sulfide-based solid electrolyte.

The sulfide-based solid electrolyte may include, for example, a Li₁₀GeP₂S₁₂ (LGPS)-based, Li₇P₃S₁₁ (LPS)-based, or LiₓP_{y}S_{z}X (LPSX)-based solid electrolyte (where X is a halogen element), and may specifically include Li₆PS₅Cl.

In an example, to coat the first electrolyte layer 120 on the surface of the active material 110, one or more methods selected from dry ball milling, dry planetary milling, mechano-fusion, and wet coating may be used, and wet coating may more preferably be used.

Wet coating, for example, may be performed by immersing the active material 110 in a solution and then introducing the solution into a reactor capable of forming an open-vacuum. By applying ultrasonic waves under the open-vacuum atmosphere, coating and drying may be performed simultaneously. In this case, the open-vacuum refers to a state in which internal pressure is reduced in an unsealed space.

In this case, an average particle diameter (D50) of the electrolyte powder may be 0.1 µm to 5 µm, and preferably 2 µm to 3 µm.

As another example of the coating process, an electrolyte powder may be dissolved in a solvent to prepare a solution, and the active material 110 may be immersed in the solution, after which stirring and vacuum coating may be performed using a rotary evaporator, whereby the first electrolyte layer 120 is coated on a surface of the active material 110 while drying is simultaneously performed.

In an optional embodiment, n-heptane or acetonitrile (ACN) may be used as the solvent in the coating process, and the electrolyte powder may be present in an amount of 2.5 wt % to 5 wt % based on the active material. If the electrolyte coating layer is less than 2.5 wt % based on the active material, the electrolyte may not be sufficiently coated on the surface of the active material, whereby a charge-discharge capacity of the battery may decrease due to pores generated therein. If the amount of the electrolyte powder exceeds 5 wt % based on the active material, smooth electron conduction may be hindered, which may lead to a decrease in electrochemical characteristics at a low rate as well as a decrease in high-rate charge-discharge capacity.

Further, when the electrolyte powder is present in an amount of 2.5 wt% to 5 wt% based on the active material, a thickness of the first electrolyte layer 120 coated on the active material 110 may be 100 nm to 1000 nm.

Although the ionic conductivity of lithium ions may improve as a thickness of the first electrolyte layer 120 increases, an excessively thick layer may hinder electron conduction even in the presence of a conductive agent, thereby degrading battery performance.

Accordingly, in the composite cathode active material 10 according to an embodiment of the present disclosure, the first electrolyte layer 120 may be coated thinly to an appropriate thickness to secure migration paths for lithium ions entering and leaving the active material 110, while simultaneously allowing electrons to move easily through a conductive agent to be described later.

The second electrolyte layer 130 may be formed on the first electrolyte layer 120 and may include first particles 131 and second particles 132 having different sizes, provided in the form of a slurry. In this case, the materials constituting the first electrolyte layer 120 and the second electrolyte layer 130 may be identical to each other.

By forming the second electrolyte layer 130 containing the first particles 131 and the second particles 132 of different sizes on the surface of the first electrolyte layer 120, the second electrolyte layer 130 may be densely formed with reduced internal pores. Thus, even when the electrolyte layer is formed to be thick, the second electrolyte layer 130 may prevent an increase in interfacial resistance and improve ionic conductivity, thereby enhancing the electrochemical stability and rate capability of the all-solid-state battery.

Further, although ionic conductivity may increase as a thickness of an electrolyte increases, in a case where a layer is formed through dry coating or wet coating like the first electrolyte layer 120, if the thickness is formed to be thick, it may be difficult to control internal physical properties such as pores, so that interfacial resistance may increase due to such pores. Accordingly, the first electrolyte layer 120 may be first coated thinly to secure migration paths for lithium ions entering and leaving the active material 110 while allowing electrons to be easily moved, and subsequently, the second electrolyte layer 130 may be additionally formed on the first electrolyte layer 120 by including first particles 131 and second particles 132 having different sizes in a slurry form, so that interfacial resistance can be reduced and ionic conductivity can be improved compared to a case in which the electrolyte is formed thick on the surface of the active material 110 by the first electrolyte layer 120 alone.

Because larger particles have lower grain boundary resistance, the ionic conductivity of the first particles 131 and the second particles 132 is high as the size increases; however, large particles may increase interfacial resistance because numerous pores are generated when physically forming a composite. Accordingly, by mixing the first particles 131, which have a large size and high ionic conductivity, with the second particles 132, which have a smaller size and lower ionic conductivity than the first particles 131, at a predetermined ratio, the resulting mixture may improve ionic conductivity, increase the contact area with the active material 110, and reduce interfacial resistance by controlling pores. In other words, by forming a bimodal electrolyte layer including particles of different sizes, the first particles 131 may increase the ionic conductivity of the electrolyte, and the second particles 132 may form a dense electrolyte structure to control internal pores and reduce interfacial resistance.

Furthermore, utilizing the first particles 131 and the second particles 132 having different sizes as described above results in a significantly reduced interfacial resistance compared to using only the first particles 131 having a large size, while the bimodal layer is formed thinly and exhibits improved ionic conductivity. Compared to using only the second particles 132 having a small size, the combination of the first particles 131 and the second particles 132 significantly improves ionic conductivity and increases density to reduce interfacial resistance.

That is, when the active material 110 is coated using both the first particles 131 and the second particles 132, the coating may be formed uniformly and thinly, thereby significantly reducing interfacial resistance and greatly improving ionic conductivity.

In one example, a ratio of the first particles 131 to the second particles 132 included in the second electrolyte layer 130 may be 9 : 1 to 7 : 3. Additionally, an average particle diameter (D50) of the first particles 131 may be 30 µm to 70 µm, and preferably 40 µm to 60 µm. An average particle diameter (D50) of the second particles 132 may be 0.1 µm to 5 µm, and preferably 2 µm to 3 µm.

Further, the average particle diameter (D50) of the second particles 132 may be identical to the average particle diameter (D50) of the electrolyte powder of the first electrolyte layer 120 described above.

By maintaining the ratio of the first particles 131 to the second particles 132 included in the second electrolyte layer 130 at 9 : 1 to 7 : 3, the second electrolyte layer 130 may be formed thinly and exhibit improved ionic conductivity. Simultaneously, by forming a dense coating layer, the second electrolyte layer 130 may increase a contact area with the active material 110 and reduce internal pores to lower interfacial resistance. Furthermore, because the first particles 131 have an average particle diameter (D50) of 40 µm to 60 µm and the second particles 132 have an average particle diameter (D50) of 2 µm to 3 µm, the second particles 132 may fill spaces between the larger first particles 131, thereby allowing the second electrolyte layer 130 to be formed thinly and densely.

In an optional embodiment, the second electrolyte layer 130 may further include a conductive agent.

The conductive agent is a conductive material that facilitates electrical conduction between the composite cathode active material 10 and the electrolyte. The conductive agent may be, for example, carbon black, graphite fine particles, natural graphite, artificial graphite, acetylene black, Ketjen black, carbon fibers; carbon nanotubes, metal powders, metal fibers, or metal tubes of copper, nickel, aluminum, or silver; and conductive polymers such as polyphenylene derivatives, or the like, but is not limited thereto, and any material that can be used as a conductive agent in the relevant technical field may be all possible, and as a specific example, the conductive agent may include Super P.

In an optional embodiment, an intermediate layer 140 may be formed between the active material 110 and the first electrolyte layer 120.

The intermediate layer 140 may be coated on a surface of the active material 110 to improve the electrochemical stability range of the active material 110, and may block contact between the cathode active material 110 and the first electrolyte layer 120 to prevent deterioration or decomposition of the solid electrolyte of the first electrolyte layer 120.

The intermediate layer 140 may include, for example, one or more selected from lithium, transition metals, oxygen, and phosphorus, may include, for example, lithium metal oxide, lithium metal phosphate, lithium phosphate, or the like, and may preferably include lithium metal oxide. As a specific example, the lithium metal oxide may be in the form of Li-M-O, where M may be Nb, Ni, Ti, Mo, Al, Zn, Cs, Cr, Ag, Mn, Rb, Sn, Cs, Sr, Hf, Sn, Ir, Rb, Cu, Ca, Ga, Cd, Ta, Re, Fe, Rh, Au, Zr, or a combination of at least one selected therefrom.

Consequently, in the composite cathode active material according to an embodiment of the present disclosure, a thin, uniform, and dense electrolyte layer may be coated on the active material. By thinly coating the first electrolyte layer, migration paths for lithium ions entering and leaving the active material may be secured while simultaneously allowing electrons to move easily through the conductive agent. Furthermore, by additionally coating the second electrolyte layer containing the first particles and the second particles of different sizes on the first electrolyte layer, interfacial resistance may be significantly reduced and ionic conductivity may be substantially improved.

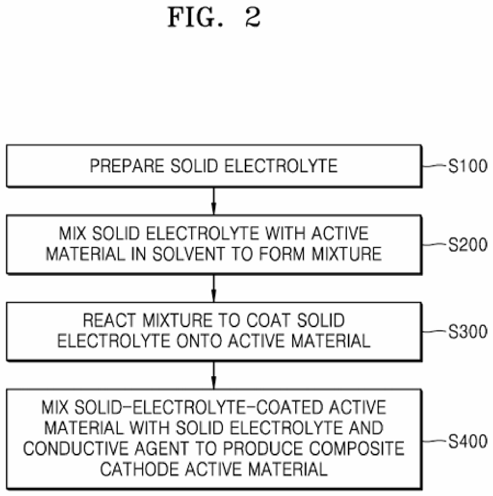

FIG. 2 is a flowchart illustrating an example of a method of manufacturing a composite cathode active material according to another embodiment of the present disclosure.

Referring to FIG. 2, the method of manufacturing a composite cathode active material may include: preparing a solid electrolyte (S100); mixing the solid electrolyte with an active material in a solvent to form a mixture (S200); reacting the mixture to coat the solid electrolyte on the active material (S300); and mixing the solid-electrolyte-coated active material with a solid electrolyte and a conductive agent (S400).

In the preparing of the solid electrolyte (S100), the solid electrolyte may include an argyrodite-type solid electrolyte, and more specifically, an argyrodite-type sulfide-based solid electrolyte.

To synthesize the solid electrolyte, a lithium precursor and a phosphorus precursor may be used.

The lithium precursor may include, for example, one or more selected from lithium oxide (Li₂O), lithium carbonate (Li₂CO₃), lithium halide (LiZ, where Z is a halogen), lithium sulfide (Li₂S), lithium nitrate (LiNO₃), lithium phosphate (Li₃PO₄), and lithium hydroxide (LiOH). The phosphorus precursor may include, for example, P₂S₅.

A solid electrolyte may be synthesized by performing mechanical milling on a lithium precursor and a phosphorus precursor using n-heptane for 60 hours to 80 hours, followed by drying and performing a heat treatment at 500 °C to 600 °C for 10 hours to 14 hours. In this case, the synthesized solid electrolyte may be a first solid electrolyte (SSE_{large}) having a large average particle diameter (D50). The first solid electrolyte (SSE_{large}) may then be pulverized into a second solid electrolyte (SSEₛₘₐₗₗ) having a small average particle diameter (D50) through ball milling. Accordingly, in the preparing of the solid electrolyte S100, two types of solid electrolytes having different average particle diameters (D50) may be prepared in the form of powders.

In the mixing of a solid electrolyte together with an active material in a solvent to form a mixture (S200), a second solid electrolyte (SSEₛₘₐₗₗ) powder having a small particle diameter and a cathode active material may be mixed in a solvent to form a mixture. For example, n-heptane or acetonitrile ACN may be used as the solvent. The cathode active material may include a combination of one or more selected from: lithium transition metal oxides such as lithium cobalt oxide LCO, lithium nickel oxide, lithium nickel cobalt oxide, lithium nickel cobalt aluminum oxide NCA, lithium nickel cobalt manganese oxide NCM, lithium manganese oxide, and lithium iron phosphate; nickel sulfide; copper sulfide; lithium sulfide; iron oxide; and vanadium oxide.

In this regard, the second solid electrolyte (SSEₛₘₐₗₗ) powder included in the mixture may be present in an amount of 2.5 wt% to 5.0 wt% based on the cathode active material.

In an optional embodiment, an intermediate layer serving as a passivation layer may be formed on a surface of the cathode active material. The intermediate layer may be in the form of Li-M-O. In this case, M may be Nb, Ni, Ti, Mo, Al, Zn, Cs, Cr, Ag, Mn, Rb, Sn, Cs, Sr, Hf, Sn, Ir, Rb, Cu, Ca, Ga, Cd, Ta, Re, Fe, Rh, Au, Zr, or a combination of at least one selected therefrom.

In the coating of the solid electrolyte on the active material by reacting the mixture (S300), the mixture is introduced into a reactor capable of forming an open-vacuum, which refers to a state of reduced pressure in an unsealed state. By applying ultrasonic waves of 30 kHz to 50 kHz under the open-vacuum atmosphere, the second solid electrolyte (SSEₛₘₐₗₗ) is coated on the surface of the cathode active material. During this process, coating and drying may be performed simultaneously, and an internal temperature of the reactor may be maintained at 50 °C to 70 °C.

In the mixing of the solid electrolyte and the conductive agent (S400), the composite cathode active material is manufactured by applying a mixture of the previously prepared first solid electrolyte (SSE_{large}) and/or second solid electrolyte (SSEₛₘₐₗₗ) and a conductive agent in a slurry state onto the surface of the cathode active material coated with the second solid electrolyte (SSEₛₘₐₗₗ), that is, onto the second solid electrolyte (SSEₛₘₐₗₗ) layer.

In addition, the conductive agent is a conductive material that facilitates electrical conduction between the composite cathode active material 10 and the electrolyte. The conductive agent may be, for example, carbon black, graphite fine particles, natural graphite, artificial graphite, acetylene black, Ketjen black, carbon fibers; carbon nanotubes, metal powders, metal fibers, or metal tubes of copper, nickel, aluminum, or silver; and conductive polymers such as polyphenylene derivatives, or the like, but is not limited thereto, and any material that can be used as a conductive agent in the relevant technical field may be all possible, and as a specific example, the conductive agent may include Super P.

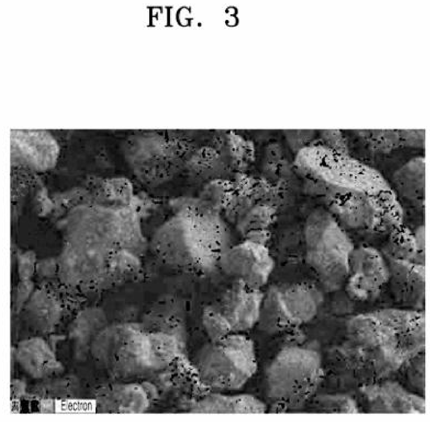

FIG. 3 is a photograph of a surface of a composite cathode active material manufactured according to the method of manufacturing a composite cathode active material of FIG. 2.

Referring to FIG. 3, the photograph confirms that the electrolyte is uniformly coated on the surface of the composite cathode active material.

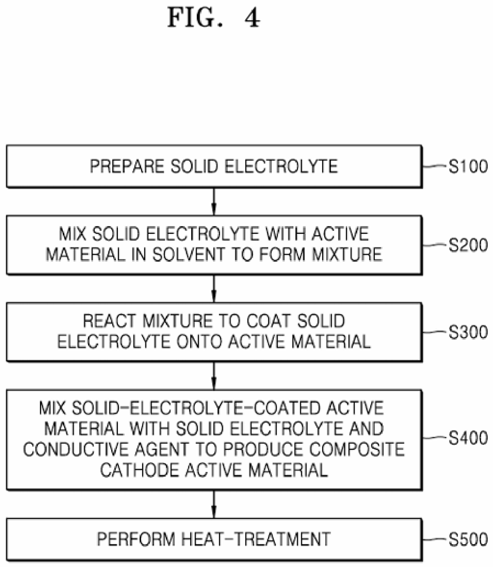

FIG. 4 is a flowchart illustrating another example of the manufacturing method of FIG. 2.

Referring to FIG. 4, the method of manufacturing a composite cathode active material may include: preparing a solid electrolyte (S100); mixing the solid electrolyte with an active material in a solvent to form a mixture (S200); reacting the mixture to coat the solid electrolyte onto the active material (S300); and mixing the solid-electrolyte-coated active material with a solid electrolyte and a conductive agent (S400). The method may further include performing a heat treatment (S500).

In the performing of a heat treatment (S500), the slurry-applied, coated cathode active material may be heat-treated at 500 °C to 600 °C for 10 hours to 14 hours to manufacture the composite cathode active material. This heat treatment process may further improve the performance of the composite cathode active material by increasing the reduced crystallinity of the first solid electrolyte (SSE_{large}) and the second solid electrolyte (SSEₛₘₐₗₗ) coated on the surface of the cathode active material to improve ionic conductivity.

Consequently, in the composite cathode active material according to an embodiment of the present disclosure, a thin, uniform, and dense electrolyte layer is coated on the active material. By thinly coating the first electrolyte layer, migration paths for lithium ions entering and leaving the active material are secured while simultaneously allowing electrons to move easily through the conductive agent. Furthermore, by additionally coating a second electrolyte layer containing first particles and second particles of different sizes on the first electrolyte layer, interfacial resistance is significantly reduced and ionic conductivity is substantially improved.

The composite cathode active material thus manufactured may be applied to an all-solid-state secondary battery.

The all-solid-state secondary battery may include the composite cathode active material prepared according to the present disclosure. The all-solid-state secondary battery includes a cathode layer, an anode layer, and a solid electrolyte layer disposed between the cathode layer and the anode layer, wherein the cathode layer and the solid electrolyte layer may include the composite cathode active material according to an embodiment of the present disclosure.

The cathode layer includes a cathode active material layer, and the cathode active material layer may include the composite cathode active material, a binder, and a solid electrolyte, and the anode layer includes an anode active material and a binder.

The cathode active material layer may include the composite cathode active material according to embodiments of the present disclosure, and by including the composite cathode active material, may include a solid electrolyte layer and a conductive agent together.

The binder may include, for example, polyvinylidene fluoride, styrene butadiene rubber (SBR), polytetrafluoroethylene, vinylidene fluoride-hexafluoropropylene copolymer, polyacrylonitrile, and polymethylmethacrylate, or the like, but is not necessarily limited thereto, and any material used as a binder in the relevant technical field may be used. Furthermore, the binder may be used alone or in a combination of a plurality of different binders.

The anode layer may include an anode active material and a binder.

The anode active material may include, for example, at least one selected from a carbon-based anode active material, a metal or metalloid anode active material, and lithium metal itself. Specifically, the anode active material may include lithium and indium metal.

The binder may include, for example, polyvinylidene fluoride, styrene butadiene rubber (SBR), polytetrafluoroethylene, vinylidene fluoride-hexafluoropropylene copolymer, polyacrylonitrile, and polymethylmethacrylate, or the like, but is not necessarily limited thereto, and any material used as a binder in the relevant technical field may be all utilized. Furthermore, the binder may be composed of a single binder or a plurality of different binders.

Consequently, an all-solid-state secondary battery including the composite cathode active material according to embodiments of the present disclosure may exhibit improved electrochemical characteristics.

### (Comparative Example 1) Cathode Composite Using Only Small-Particle Electrolyte

Li₂S, P₂S₅, and LiCl were mixed in a 5:1:2 mol% ratio using n-heptane, followed by mechanical milling for 72 hours. The mixture after mechanical milling was heat-treated at 550 °C for 12 hours under an inert gas atmosphere to synthesize a solid electrolyte. The synthesized solid electrolyte was placed in toluene, a non-reactive solvent, along with 3 mm balls and ball-milled to prepare an electrolyte powder having an average particle diameter (D₅₀) of 3 µm. A composite cathode active material was prepared by mixing 70 % of conductive agent and LiNbO₃-coated cathode active material (Li[Ni_{0.6}Co_{0.2}Mn_{0.2}]O₂) (hereinafter, LNO-NCM622), 30 % of the prepared electrolyte powder, and 1.3% of Super P as a conductive agent.

### (Comparative Example 2) Cathode Composite Using Only Large-Particle Electrolyte

Li₂S, P₂S₅, and LiCl were mixed in a 5:1:2 mol% ratio using n-heptane, followed by mechanical milling for 72 hours. The mixture after mechanical milling was heat-treated at 550 °C for 12 hours under an inert gas atmosphere to synthesize a solid electrolyte. Using the synthesized solid electrolyte, an electrolyte powder having an average particle diameter (D50) of 50 µm was prepared. A composite cathode active material was then prepared by mixing 70 % of conductive agent and LiNbO₃-coated cathode active material (Li[Ni_{0.6}Co_{0.2}Mn_{0.2}]O₂) (hereinafter, LNO-NCM622), 30 % of the prepared electrolyte powder, and 1.3 % of Super P as a conductive agent.

### (Comparative Example 3) Using Only Small-Particle Electrolyte Subjected to Chemical Reaction in Reactive Solvent

Li₂S, P₂S₅, and LiCl were mixed in a 5:1:2 mol% ratio using n-heptane, followed by mechanical milling for 72 hours. The mixture after mechanical milling was heat-treated at 550 °C for 12 hours under an inert gas atmosphere to synthesize a solid electrolyte. The synthesized solid electrolyte was added to an acetonitrile (ACN) solvent to form a solution. Under an open-vacuum atmosphere, ultrasonic waves of 40 kHz were applied at 60 °C to dry the solution, thereby preparing an electrolyte powder having an average particle diameter (D₅₀) of 6 µm. A composite cathode active material was then prepared by mixing 70 % of conductive agent and LiNbO₃-coated cathode active material (Li[Ni_{0.6}Co_{0.2}Mn_{0.2}]O₂) (hereinafter, LNO-NCM622), 30 % of the prepared electrolyte powder, and 1.3% of Super P as a conductive agent.

### (Example 1) Using an Electrolyte Prepared by Mixing a Large-Particle Electrolyte and a Small-Particle Electrolyte at a Mass Ratio of 9:1 (90 % Large-Particle Electrolyte)

The electrolyte powders prepared in Comparative Example 2 and Comparative Example 1 were mixed in a mortar at a mass ratio of 9:1 to prepare a bimodal electrolyte powder. A composite cathode active material was prepared by mixing 70% of conductive agent and LiNbO₃-coated cathode active material (Li[Ni_{0.6}Co_{0.2}Mn_{0.2}]O₂) (hereinafter, LNO-NCM622), 30 % of the prepared bimodal electrolyte powder, and 1.3% of Super P as a conductive agent.

### (Example 2) Using Only Small-Particle Electrolyte and Using a Cathode with 30 wt% Small-Particle Electrolyte Coated on the Cathode Surface

0.35 g of a cathode active material (LNO-NCM622) was added to 200 cc of an acetonitrile solvent together with 0.15 g of the electrolyte powder prepared in Comparative Example 1, and coating and drying were simultaneously performed by creating an open-vacuum atmosphere while applying ultrasonic waves of 40 kHz at 60 °C to manufacture a cathode active material in which the electrolyte of Comparative Example 1 was coated at 30 wt% based on the cathode active material; thereafter, a composite cathode active material was prepared by mixing 100 % of the electrolyte-coated cathode active material with 1.3 % of Super P as a conductive agent.

### (Example 3) Using Only Small-Particle Electrolyte and Using a Cathode Active Material with 5.0 wt% Small-Particle Electrolyte Coated on the Cathode Surface

0.4750 g of a cathode active material (LNO-NCM622) was added to 200 cc of an acetonitrile solvent together with 0.0250 g of the electrolyte powder prepared in Comparative Example 1, and coating and drying were simultaneously performed by creating an open-vacuum atmosphere while applying ultrasonic waves of 40 kHz at 60 °C to manufacture a cathode active material in which the electrolyte of Comparative Example 1 was coated at 5.0 wt% based on the cathode active material, whereupon a composite cathode active material was prepared by mixing 75 % of the electrolyte-coated cathode active material, 25 % of the electrolyte powder of Comparative Example 1, and 1.3 % of Super P as a conductive agent. In the final composition, a total proportion of the cathode composite was 70 %, a total proportion of the electrolyte was 30 %, and a proportion of the Super P conductive agent was 1.3 %.

### (Example 4) Using Only Small-Particle Electrolyte and Using a Cathode Active Material with 2.5 wt% Small-Particle Electrolyte Coated on the Cathode Surface

0.4750 g of a cathode active material (LNO-NCM622) was added to 200 cc of an acetonitrile solvent together with 0.0125 g of the electrolyte powder prepared in Comparative Example 1, and coating and drying were simultaneously performed by creating an open-vacuum atmosphere while applying ultrasonic waves of 40 kHz at 60 °C to manufacture a cathode active material in which the electrolyte of Comparative Example 1 was coated at 2.5 wt% based on the cathode active material, whereupon a composite cathode active material was prepared by mixing 72.5 % of the electrolyte-coated cathode active material, 27.5 % of the electrolyte powder of Comparative Example 1, and 1.3 % of Super P as a conductive agent. In the final composition, a total proportion of the cathode composite was 70 %, a total proportion of the electrolyte was 30 %, and a proportion of the Super P conductive agent was 1.3 %.

### (Example 5) Using a Bimodal Electrolyte Prepared by Mixing Large-Particle and Small-Particle Electrolytes at a 9:1 Ratio, and Using a Cathode Active Material with 5.0 wt% Small-Particle Electrolyte Coated on the Cathode Surface

As in Example 3, a cathode active material was prepared in which the electrolyte of Comparative Example 1 was coated at 5.0 wt% based on the cathode active material, and a composite cathode active material was then prepared by mixing 75 % of the electrolyte-coated cathode active material, 25 % of the bimodal electrolyte powder of Example 1, and 1.3 % of Super P as a conductive agent. In the final composition, a total proportion of the cathode composite was 70%, a total proportion of the electrolyte was 30 %, and a proportion of the Super P conductive agent was 1.3 %.

### (Example 6) Using a Bimodal Electrolyte Prepared by Mixing Large-Particle and Small-Particle Electrolytes at a 9:1 Ratio, and Using a Cathode Active Material with 2.5 wt% Small-Particle Electrolyte Coated on the Cathode Surface

As in Example 4, a cathode active material was prepared in which the electrolyte of Comparative Example 1 was coated at 2.5 wt% based on the cathode active material. A composite cathode active material was then prepared by mixing 72.5 % of this electrolyte-coated cathode active material, 27.5 % of the bimodal electrolyte powder of Example 1, and 1.3 % of Super P as a conductive agent. In the final composition, the total proportion of the cathode composite was 70%, the total proportion of the electrolyte was 30 %, and the proportion of Super P conductive agent was 1.3%.

### (Experimental Example 1) Measurement of Ionic Conductivity

The ionic conductivity was measured by placing each of the electrolyte powders prepared in Comparative Examples 1 to 3 in a mold, pressurizing the same at 7 ton, and measuring a thickness and electrochemical impedance spectroscopy (EIS) thereof.

### (Experimental Example 2) Evaluation of Electrochemical Charge-Discharge Rate Capability

The composite cathode active materials of Examples 1 to 6 and Comparative Examples 1 to 3 were utilized to manufacture battery cells having a diameter of 13 mm using a Li-In composite as a working electrode, and charge-discharge cycles were repeatedly performed using a WonAtech battery cycler at a temperature of 30 °C at charge-discharge rates of 0.1 C (where 1 C = 200 mA/g), 0.2 C, 0.5 C, 1.0 C, and 2.0 C within a voltage range of 2.38 V to 3.68 V vs. In/Li+, which corresponds to 3.0 V to 4.3 V vs. Li/Li+.

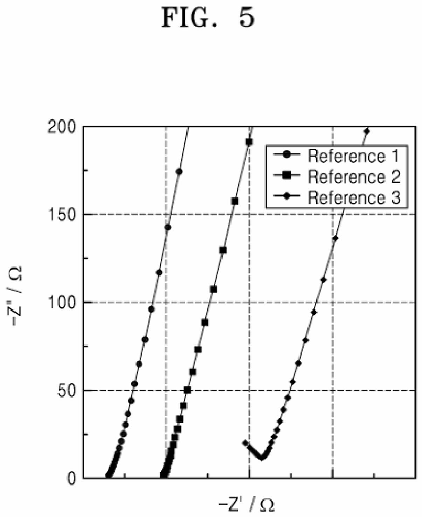

FIG. 5 is a graph illustrating ionic conductivity.

Referring to FIG. 5, the ionic conductivities of the electrolyte powders prepared in Comparative Examples 1 to 3 can be observed.

It was confirmed that Comparative Example 2, which has a larger particle size and thus a smaller total interfacial area, exhibited the highest lithium ionic conductivity whereas Comparative Example 1, which has a smaller particle size and thus a larger total interfacial area, exhibited a lower ionic conductivity compared to Comparative Example 2. Additionally, in the case of the electrolyte powder of Comparative Example 3 prepared in the same manner as coating an electrolyte on a cathode active material, the crystallinity and degree of crystallization were found to be degraded, such that as interfacial resistance increased, the ionic conductivity of Comparative Example 3 was found to be one-tenth or less of the conductivities of Comparative Examples 1 and 2.

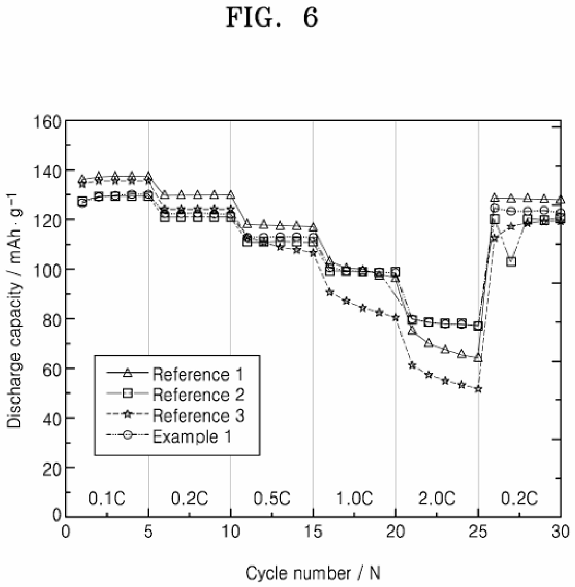

FIG. 6 is a graph illustrating the rate capability of Comparative Examples 1 to 3 and Example 1.

Referring to FIG. 6, Comparative Example 1, which has a low ionic conductivity but a small particle diameter, was found to exhibit a high capacity at relatively low rates of 0.1 C, 0.2 C, and 0.5 C because a contact area with the cathode active material is increased, whereas Comparative Example 1 was found to exhibit a low capacity at high rates of 1.0 C and 2.0 C due to the low ionic conductivity thereof.

Conversely, Comparative Example 2, which has high ionic conductivity but a large particle diameter, was found to exhibit lower capacity at relatively low rates such as 0.1 C, 0.2 C, and 0.5 C compared to Comparative Example 1 because the contact area with the cathode active material is small. At high rates such as 1.0 C and 2.0 C, Comparative Example 2 was found to exhibit relatively high capacity owing to its high ionic conductivity, despite the small contact area. However, the capacity of Comparative Example 2 was observed to gradually decrease after only 5 cycles of repeated charge and discharge at a fast rate such as 1.0 C.

In the case of Comparative Example 3 which was chemically reacted, it was confirmed that because a contact area with the cathode active material was smaller than that of Comparative Example 1 but larger than that of Comparative Example 2, a high capacity similar to that of Comparative Example 1 was exhibited at a slow rate of 0.1 C. However, because Comparative Example 3 has the lowest ionic conductivity, a very sharp decrease in capacity occurred as the charge-discharge rate increased from 0.2 C.

In Example 1 (bimodal electrolyte) in which Comparative Example 1 and Comparative Example 2 were mixed at a mass ratio of 1 : 9, it was confirmed that because a large amount of the electrolyte having a large particle size was present, a contact area with the cathode active material was not sufficiently formed such that capacity levels higher than that of Comparative Example 2 but lower than that of Comparative Example 1 were exhibited at 0.1 C, 0.2 C, and 0.5 C. Subsequently, as the charge-discharge rates increased, Example 1 exhibited higher performance than those of Comparative Example 1 and Comparative Example 2 at 1.0 C and 2.0 C. These results confirm that battery performance can be improved by increasing the density of the electrode.

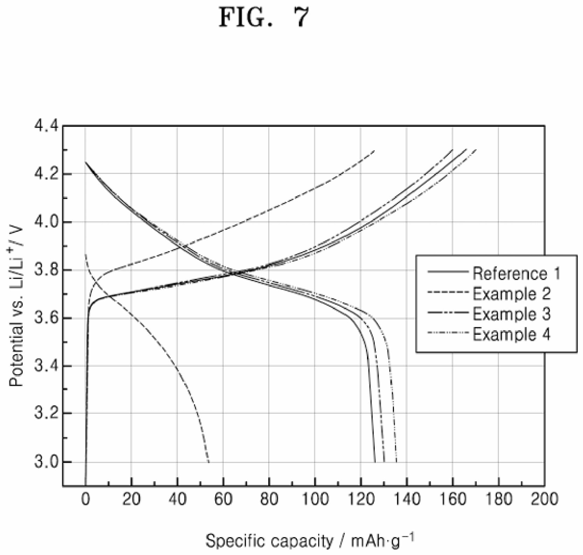

FIG. 7 is a charge-discharge graph of Comparative Example 1 and Examples 2 to 4.

Referring to FIG. 7, in Example 2, where the electrolyte coating layer was 30 wt% based on the cathode active material, it was confirmed that charging and discharging did not properly occur even at a low C-rate of 0.1 C. This is attributed to insufficient electron conduction despite the presence of a sufficient ion conduction layer; specifically, even when a conductive agent is additionally added, an excessive distance between the cathode and the conductive agent hinders electron conduction, leading to improper charging and discharging even at the low rate of 0.1 C.

In Example 3 in which the electrolyte was coated in an amount of 5.0 wt% based on the cathode active material (one-sixth of Example 2), it was confirmed that while charging and discharging could proceed smoothly as electrons moved more freely than in Example 2, a higher discharge capacity than even that of Comparative Example 1 was exhibited during discharging. However, due to an inappropriate thickness of the electrolyte coating layer, charging characteristics of the cell did not properly manifest during charging.

In Example 4, where the electrolyte was coated in an amount of 2.5 wt% based on the cathode active material, both lithium ion migration and electron migration occurred smoothly, such that Example 4 was confirmed to exhibit a higher capacity in both charging and discharging compared to Comparative Example 1 in which the cathode active material was not coated with an electrolyte.

FIG. 8 is a graph illustrating the lifetime characteristics and rate capability of Comparative Example 1 and Examples 2 to 4.

Referring to FIG. 8, in Example 2, in which the cathode active material was coated with 30 wt% of electrolyte based on the cathode active material, smooth charging and discharging did not occur even at a low C-rate of 0.2 C.

In Example 3 where the cathode active material was coated with 5.0 wt% of the electrolyte based on the cathode active material, the discharge capacity at 0.2 C was slightly higher than that of Comparative Example 1 (uncoated), but when the rate was increased to 0.5 C, the capacity reduction was found to be significantly large. This is inferred to be associated with decreased ionic conductivity resulting from a decrease in the crystallinity and degree of crystallization of the electrolyte during the coating process, as well as high interfacial resistance between electrolytes.

In Example 4, in which the electrolyte was coated in an amount of 2.5 wt% based on the cathode active material, the highest discharge capacity was exhibited at 0.2 C and was confirmed to remain stable. However, similar to Example 3, the magnitude of capacity reduction at 0.5 C was inferred to be greater than that of other electrolytes due to a decrease in ionic conductivity during a coating process and a higher overall interfacial resistance caused by a larger surface area of the electrolyte reacted with the reactive solvent.

In contrast, Comparative Example 1, in which the cathode active material was not coated, exhibited lower capacity at 0.2 C but showed a very small magnitude of capacity reduction at 0.5 C because there was no degradation of the electrolyte used.

FIG. 9 is a graph illustrating the rate capability of Examples 1, 5, and 6.

Referring to FIG. 9, Example 1, in which the surface of the cathode active material was not coated with electrolyte, exhibited low capacity starting from a low rate of 0.1 C.

In Example 5, in which the electrolyte was coated in an amount of 5.0 wt% based on the cathode active material, it was confirmed that a higher capacity than that of Example 1 was exhibited starting from 0.1 C due to a high contact area between the active material and the electrolyte, and the difference compared to Example 1 narrowed as the rate increased to reach a similar capacity at 1.0 C. However, a lower capacity than that of Example 1 was exhibited at 2.0 C due to a decrease in ionic conductivity resulting from deterioration of the electrolyte coated on a surface of the active material.

In Example 6, in which the electrolyte was coated in an amount of 2.5 wt% based on the cathode active material, a high contact area between the active material and the electrolyte was maintained while a coating thickness remained thin, thereby sufficiently improving electron conductivity under the influence of the conductive agent that facilitates electron movement. Accordingly, it was confirmed that Example 6 was able to exhibit a sufficiently high capacity across a range from a low rate of 0.1 C to a high rate of 2.0 C.

FIG. 10 is an X-ray diffraction (XRD) graph of Comparative Example 1 and Examples 3 to 6.

Referring to FIG. 10, XRD graphs are provided for the electrolyte used in Comparative Example 1, the cathode active material before coating (LNO-NCM622, Reference Cathode), electrolyte-active material composites coated with 5.0 wt% of electrolyte (Examples 3 and 5), and electrolyte-active material composites coated with 2.5 wt% of electrolyte (Examples 4 and 6).

Through the graphs, when comparing Examples 3 to 6 with the electrolyte used in Comparative Example 1 and the cathode active material before coating (LNO-NCM622, Reference Cathode), it was confirmed that the crystallinity of the electrolyte does not significantly decrease after particle size adjustment and that impurities other than NCM622 and the electrolyte are not present before or after coating.

FIG. 11 is a graph showing the rate capability of Comparative Example 1 and Example 6.

Referring to FIG. 11, it was confirmed that when a composite cathode active material is prepared by mixing a bimodal electrolyte with an electrolyte-coated cathode active material (prepared by coating an electrolyte on a cathode active material as in Example 6) and a charge-discharge process is performed, the resulting composite cathode active material exhibits significantly improved charge-discharge characteristics across a range from low rates to high rates compared to Comparative Example 1.

Consequently, in the composite cathode active material according to an example of the present disclosure, a thin, uniform, and dense electrolyte layer may be coated on an active material, wherein by coating the first electrolyte layer thinly, migration paths for lithium ions entering and leaving the active material are secured while electrons are simultaneously allowed to move easily through a conductive agent, and by additionally coating a second electrolyte layer containing first particles and second particles of different sizes on the first electrolyte layer, interfacial resistance is significantly reduced and ionic conductivity is substantially improved.

While the present disclosure has been described with reference to exemplary embodiments illustrated in the drawings, it will be understood by those skilled in the relevant technical field that various modifications and variations may be made without departing from the spirit and scope of the present disclosure. Accordingly, the scope of the present disclosure is not limited to the disclosed embodiments but is to be determined by the appended claims.

## Claims

1. A composite cathode active material, comprising:
an active material;
a first electrolyte layer disposed on the active material; and
a second electrolyte layer disposed on the first electrolyte layer,
wherein the first electrolyte layer is present in an amount of 2.5
wt% to 5.0 wt% based on a weight of the active material.

2. The composite cathode active material of claim 1,
wherein a thickness of the first electrolyte layer is 100 nm to 1000 nm.

3. The composite cathode active material of claim 1,
wherein the second electrolyte layer comprises first particles and second particles having different sizes, and
wherein an average particle diameter (D50) of the first particles is larger than that of the second particles.

4. The composite cathode active material of claim 3,
wherein the average particle diameter (D50) of the first electrolyte layer is identical to tje average particle diameter (D50) of the second particles.

5. The composite cathode active material of claim 3,
wherein a ratio of the first particles to the second particles is 9 : 1 to 7 : 3.

6. The composite cathode active material of claim 1,
wherein the first electrolyte layer and the second electrolyte layer comprise an identical material.

7. The composite cathode active material of claim 1, further comprising an intermediate layer between the active material and the first electrolyte layer.

8. A method of manufacturing a composite cathode active material, comprising:
preparing a solid electrolyte;
mixing the solid electrolyte with an active material in a solvent to form a mixture;
reacting the mixture to coat the solid electrolyte onto the active material; and
mixing the solid-electrolyte-coated active material with the solid electrolyte and a conductive agent.

9. The method of manufacturing a composite cathode active material of claim 8,
wherein, in the preparing of the solid electrolyte, the solid electrolyte comprises a first solid electrolyte and a second solid electrolyte having different average particle diameters (D50).

10. The method of manufacturing a composite cathode active material of claim 9,
wherein the mixture comprises the second solid electrolyte, and wherein the average particle diameter (D50) of the second solid electrolyte is smaller than that of the first solid electrolyte.

11. The method of manufacturing a composite cathode active material of claim 10,
wherein the second solid electrolyte included in the mixture is present in an amount of 2.5 wt% to 5 wt% based on a weight of the active material.

12. The method of manufacturing a composite cathode active material of claim 8, further comprising
performing a heat treatment.

13. An all-solid-state battery comprising:
a composite cathode active material; and
an anode layer disposed on the composite cathode active material, wherein the composite cathode active material comprises an active material;
a first electrolyte layer disposed on the active material; and
a second electrolyte layer disposed on the first electrolyte layer.
